Europäisches Patentamt

European Patent Office

Office européen des brevets

(11) Veröffentlichungsnummer: **0 222 076 B1**

(12) **EUROPÄISCHE PATENTSCHRIFT**

(45) Veröffentlichungstag der Patentschrift: **28.04.93**

(21) Anmeldenummer: **86111245.6**

(22) Anmeldetag: **14.08.86**

(51) Int. Cl.5: **H04B 7/26**

(54) Verfahren zum digitalen Übertragen von Sprache und Daten.

(30) Priorität: **09.11.85 DE 3539818**

(43) Veröffentlichungstag der Anmeldung:
**20.05.87 Patentblatt 87/21**

(45) Bekanntmachung des Hinweises auf die
Patenterteilung:
**28.04.93 Patentblatt 93/17**

(84) Benannte Vertragsstaaten:
**AT BE CH DE FR GB IT LI LU NL SE**

(56) Entgegenhaltungen:
**EP-A- 0 189 822**

**PROCEEDINGS OF THE IEEE, Band 72, Nr. 11, November 1984, Seiten 1556-1563, New York, US; B. JABBARI: "Cost-effective networking via digital satellite communications"**

**IEEE INTERNATIONAL CONFERENCE ON COMMUNICATIONS, Philadelphia, 13.-17. Juni 1982, Band 3, Seiten 7F.4.1 - 7F.4.5, IEEE, New York, US; B. JABBARI: "Combined FDMA-TDMA: A cost effective technique for digital satellite communication networks"**

**RUNDFUNKTECHNISCHE MITTEILUNGEN, Band 29, Nr. 1, Januar-Februar 1985, Seiten**

**1-8, Noderstedt, DE; U. MESSERSCHMID: "Digitaler Hörfunk im UKW-Bereich-Modulationsverfahren und Kanalaufteilung, Chancen und Risiken"**

**IEEE International Communications Conference, vol. 1-4, 14-18 June 1981, Denver, USA; K. Kinoshita et al.: "Digital mobile radio telephone system using TD/FDMA scheme", Seiten 23.4.1 - 23.4.5**

(73) Patentinhaber: **ROBERT BOSCH GMBH
Postfach 30 02 20
W-7000 Stuttgart 30(DE)**

(72) Erfinder: **Ketterling, Hans-Peter, Dipl.-Ing.
Manfred-von-Richthofen-Strasse 11
W-1000 Berlin 42(DE)**
Erfinder: **Lange, Wolfgang
Am Hüllepfuhl 14
W-1000 Berlin 20(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung geht von einem Verfahren nach der Gattung des Anspruchs 1 aus.

Es ist ein nach dem FDMA(Frequency division multiple access)-Verfahren arbeitendes Funktelefonnetz bekannt (IEEE International Communications Conference, Vol. 1-4, June 14-18, 1981, Denver, USA), das insbesondere bei höheren Trägerfrequenzen einige erhebliche Nachteile aufweist. Als mobile Funkstationen müssen aufwendige Duplexgeräte mit Frequenzweichen verwendet werden; außerdem sind aufwendige Mittel zur Kanalselektion, wie zum Beispiel Quarzfilter, erforderlich. Weiterhin muß eine verhältnismäßig komplizierte Vielkanal-Frequenzaufbereitung angewendet werden, und schließlich muß auch die Trägerfrequenz sehr genau eingehalten werden. In den Basisstationen ist der Aufwand durch den Antennenkoppler, eine große Zahl von HF-Leistungsverstärkern, eine Vielzahl von hochwertigen RF-Empfängern, eine komplizierte Vielkanal-Frequenzaufbereitung, eine hochwertige Kanalselektion und einen hohen Leistungsbedarf, vor allem bei großen Kanalzahlen, bestimmt. Betrachtet man das gesamte System, so ergeben sich bei dem bekannten FDMA-Verfahren noch weitere Nachteile, die sich im Betrieb äußern, wie zum Beispiel mäßige Empfindlichkeit bzw. geringe Störabstände infolge kleiner Modulationsindizes, geringe Gleichkanalunterdrückung infolge kleiner Modulationsindizes, Interkanalmodulations-Probleme infolge einer Vielzahl von Trägerfrequenzen, begrenzte spektrale Reinheit der Frequenzen, hohe Empfindlichkeit gegen Impulsstörer (Zündfunken) vor allem bei niedrigen Trägerfrequenzen, begrenzte Datenübertragungsraten infolge relativ geringer Übertragungsbandbreite und begrenzte Bitraten bei der Übertragung digitalisierter Sprache infolge der geringen Bandbreite pro Funkkanal. Die meisten dieser Nachteile sind vermeidbar, wenn man auf eine digitale Übertragung von Daten und Sprache übergeht. Hierzu eignet sich insbesondere ein digitales TDMA-Verfahren. Bei extrem breitbandigen Übertragungsverfahren entstehen jedoch neue Probleme, wie zum Beispiel großer Bandbreitenbedarf infolge der erforderlichen Spreizung, hohe Signalverarbeitungsgeschwindigkeit und Störungen bei der Übertragung durch Mehrwegeausbreitung. Will man zum Beispiel 50 oder mehr Sprachkanäle zusammenfassen, so kommt man auf Bandbreiten von mehreren hundert Kilohertz. Bei Überschreiten der sogenannten Kohärenzbandbreite, die etwa 250 kHz beträgt, führen bei normaler digitaler Frequenzmodulation oder Phasenmodulation die Mehrwegeausbreitungseffekte infolge der Überlagerung von Signalanteilen mit verschiedener Laufzeit zu Störungen, welche die Signale unauswertbar machen. Durch den Übergang auf spezielle Modulationsverfahren und Bandspreizung sowie durch die Verwendung von Korrelationsempfängern kann man die Übertragungsprobleme jedoch wieder in den Griff bekommen. Bei breitbandigen TDMA-Verfahren ist dazu jedoch vor allem in den Empfängern ein erheblicher Aufwand erforderlich, der die beim Übergang vom FDMA- auf das TDMA-Verfahren gewonnenen Vorteile teilweise wieder zunichte macht.

## Vorteile der Erfindung

Das erfindungsgemäße Verfahren mit den kennzeichnenden Merkmalen des Anspruchs 1 hat den Vorteil, daß die Modulationsbandbreite unterhalb der Kohärenzbandbreite bleibt und daß deshalb relativ einfach aufgebaute und unkritische Funkempfänger verwendet werden können. Als Funkempfänger eignen sich vorzugsweise normale FM-Funkempfänger mit ihren guten Begrenzungseigenschaften und ihrer hohen RF-Dynamik, die ohne weiteres 120 dB erreichen kann. Für die mobilen Funkstationen ergeben sich durch die Anwendung des erfindungsgemäßen Verfahrens geringere Herstellungskosten für die Mobilstationen, geringere Anforderungen an die Frequenzkonstanz, ein geringerer Filteraufwand, geringe Anforderungen an die spektrale Reinheit der Sendefrequenzen, sehr kleine Ein- und Ausschaltzeiten für den Sender der mobilen Funkstation, nur wenige Bits eines Bursts für den Laufzeitausgleich, und außerdem lassen sich die für die Übertragung benutzten Teilbänder flexibel an das verfügbare Frequenzband anpassen. Für die Basisstationen ergibt sich der Vorteil, daß beispielsweise nur ein Zehntel der sonst benötigten RF-Sende- und -Empfangsbaugruppen benötigt wird und daß eine Ausbaufähigkeit in Schritten von jeweils zehn Funkkanälen gegeben ist, wenn beispielsweise je zehn Sprachkanäle zusammengefaßt und auf einem gemeinsamen Träger im Zeitmultiplex-Verfahren übertragen werden. Insgesamt hat das erfindungsgemäße Schmalband-Zeitmultiplex-Verfahren noch weitere Vorteile. Sendet eine Mobilstation nicht burstweise, sondern fehlerhaft kontinuierlich, so ist nicht gleich ein breites Frequenzband unbenutzbar; in diesem Fall besteht vielmehr die Umschaltmöglichkeit auf ein anderes Teilfrequenzband. Die Ausregelung der Laufzeitänderungen ist insbesondere bei den Basisfunkstationen bei der gewählten Bitrate einfach zu beherrschen. Bei Ausfall eines Schmalband-TDMA-Funktelefonnetzes werden nur einige Funkkanäle gestört. Nachbar-Funkzellen können, sofern sie nicht überlastet sind, den Funkverkehr übernehmen. Von den weiteren Vorteilen, die sich durch die Anwendung des erfindungsgemäßen Verfahrens ergeben, seien nur folgende genannt. Bei einem RF-Trägerabstand von 250 kHz und zehn Sprachkanälen je RF-Träger ist der Bandbreitenbedarf genau der gleiche wie bei konventionellen FDMA-Verfahren. Außerdem ist die Datenübertragung für andere Dienste als für die Telefonie problemlos möglich. Das erfindungsgemäße FD/TDMA-Verfahren stellt demnach einen guten Kompromiß zwischen einen FDMA- und Breitband-TDMA-Verfahren dar, wobei die Vorteile des erfindungsgemäßen Verfahrens überwiegen.

Das erfindungsgemäße Verfahren weist optimale Eigensehaften auf, wenn die Übertragung in n Kanälen mit einer Übertragungsrate von m Kilobit/s derart stattfindet, daß die Gesamtübertragungsrate $r = m \cdot n \leq 100 ... 200$ kbit/s ist, und wenn die Übertragung mit mehrlagiger Modulation derart stattfindet, daß die Übertragungsbandbreite unter der Kohärenzbandbreite von etwa 250 kHz liegt.

Zeichnung

Ein Ausführungsbeispiel der Erfindung wird in der Zeichnung an Hand mehrerer Figuren dargestellt und in der nachfolgenden Beschreibung näher erläutert.

Die Zeichnung zeigt in
Fig. 1 ein vierwertiges Digitalsignal,
Fig. 2 den Zeitverlauf eines Vierlagen-FSK-Signals und
Fig. 3 ein Modulationsspektrum der optimal gefilterten 00-11-Folge und der Empfängerbandbreite.

Beschreibung der Erfindung

Bei der erfindungsgemäßen digitalen Übertragung von Daten und Sprache wird ein Schmalband-Zeitmultiplex-Verfahren angewendet (FD/TDMA). Dabei muß die Übertragungsbandbreite unterhalb der sogenannten Kohärenzbandbreite von etwa 250 kHz bleiben, damit die Datenübertragung nicht durch eine störende Laufzeitdispersion behindert wird. Die Datenrate sollte unter 100 ... 200 kbit/s liegen, weil sonst eine viellagige Modulation angewendet werden müßte, die einen relativ hohen Störabstand benötigt. Wie einschlägige Untersuchungen zeigen, ist bei Mehrwegausbreitung unter extrem schlechten Bedingungen damit zu rechnen, daß verzögerte Anteile mit bis zu 10 μs Zeitdifferenz auftreten können, deren Amplituden nicht mehr als 10 dB unter dem stärksten Einzelsignal liegen. Bei Verzögerung über 10 μs ist die Differenz der Amplituden mit großer Wahrscheinlichkeit größer, und diese Signale spielen infolge der Gleichkanalunterdrückungseffekte keine Rolle mehr. Somit sollte eine Symbollänge von mehr als 10 μs gewählt werden. Eine gute Auswertbarkeit ist bei etwa 20 μs Symbollänge gegeben. Diese gestattet, die gewünschten 128 kbit/s beispielsweise mit einer Vierlagenmodulation zu übertragen.

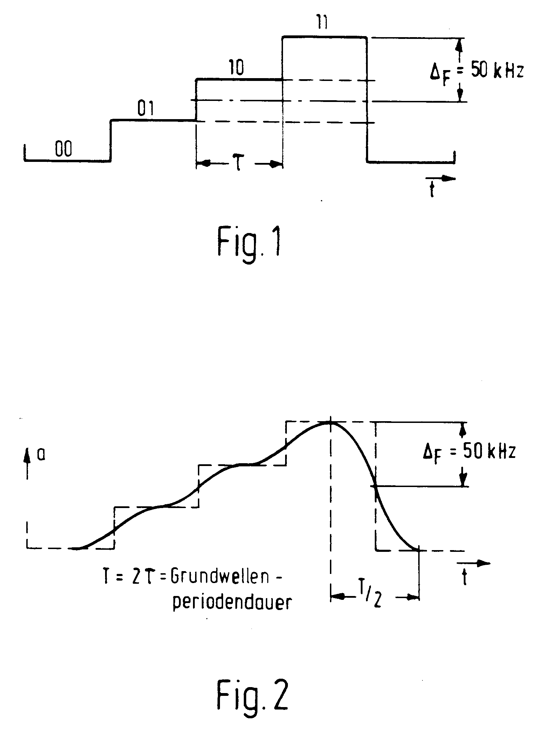

Um Störabstand, Bandbreite und Gleichkanalunterdrückung zu optimieren, wurde eine MSK- (Minimum shift keying)-ähnliche Modulationsart gewählt, und zwar eine vierlagige Frequenzmodulation; vgl. das in Fig. 1 gezeigte vierwertige Digitalsignal mit einer Bitdauer bzw. Symbollänge $\tau$ von vorzugsweise 15,6 μs. Nach entsprechender Filterung des Digitalsignals sind im wesentlichen nur noch die höchste Schrittfrequenz von beispielsweise 32 kHz und Subharmonische davon in der Modulation enthalten; vgl. optimal gefiltertes Modulationssignal in Fig. 2. Der Frequenzhub ist für den Übergang zwischen den logischen Extremzuständen 00 und 11 vorzugsweise auf $2 \cdot 50$ kHz festgelegt. Für eine 00-11-Folge als Datensignal ergibt sich damit die größtmögliche Bandbreite, wobei das Modulationssignal praktisch eine reine 32-kHz-Schwingung ist. Im normalen Betrieb treten die logischen Zustände statistisch gemischt auf, wodurch eine Modulationsbandbreite für eine Dämpfung der Modulationsprodukte von 70 dB bezogen auf den unmodulierten Träger von unter 300 kHz entsteht. Damit kann man die RF-Trägerabstände prinzipiell auf etwa 250 kHz verringern.

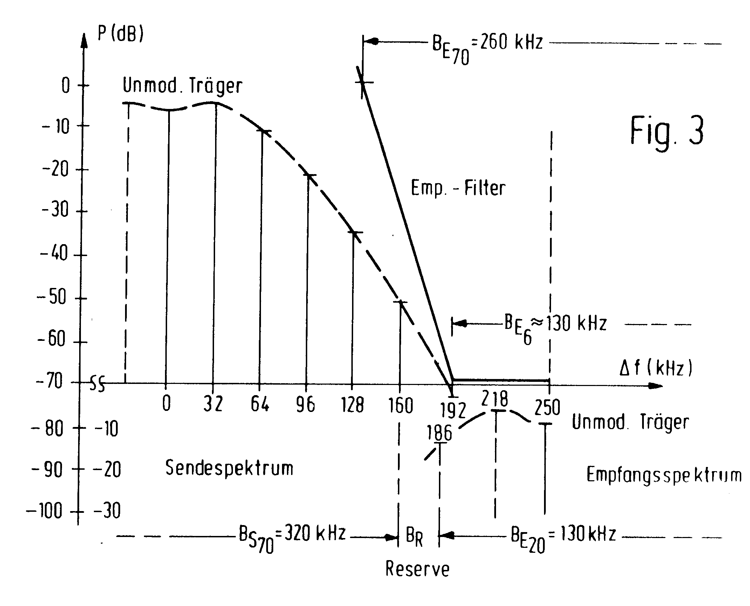

Das in Fig. 3 gezeigte Modulationsspektrum stellt zum Vergleich die Bandbreitenverhältnisse für einen ungünstigen Fall der Funkübertragung dar. In dem Modulationsspektrum bedeuten $B_{S70}$ und $B_{E70}$ die jeweilige Modulationsbandbreite bei 70 dB Nachbarträgerunterdrückung.

**Patentansprüche**

1. Verfahren zum digitalen Übertragen per Eunk von Daten und Sprache im Schmalband-Zeitmultiplex (FD/TDMA), **dadurch gekennzeichnet,** daß die Übertragung zur Verminderung des Einflusses von Mehrwegausbreitungseffekten in n Kanälen mit einer Übertragungsrate von m Kilobit/s derart stattfindet, daß die Gesamtübertragungsrate $r = m \cdot n \leq 100 ... 200$ kbit/s ist und daß die Übertragung mit mehrlagiger Modulation derart stattfindet, daß die Übertragungsbandbreite unter der Kohärenzbandbreite von etwa 250 kHz liegt.

2. Verfahren nach Anspruch 1, dadurch gekennzeichnet, daß eine Bündelung von jeweils etwa zehn Sprachkanälen vorgesehen ist und daß die Datenübertragungsrate etwa 130 kbit/s beträgt.

3. Verfahren nach einem der Ansprüche 1 bis 2, dadurch gekennzeichnet, daß die mehrlagige Modulation eine MSK-ähnliche Modulation ist.

4. Verfahren nach einem der Ansprüche 1 bis 3, dadurch gekennzeichnet, daß die Symbollänge bzw. Bitdauer $\tau > 10$ $\mu$s ist und eine Vierlagenmodulation angewendet wird.

## Claims

1. A method for digitally transmitting per Eu data and speech in the narrow band time multiplex (FD/TDMA), characterised in that in order to reduce the influence of multi-path spreading effects in n channels, the transmission takes place at a transmission rate of m kilobit/s in such a way that the total transmission rate is r $= m . n \leq 100 ... 200$ kbit/s and that the transmission takes place with multi-layer modulation in such a way that the transmission band width lies below the coherence band width of approx. 250 kHz.

2. A method according to claim 1 characterised in that a bundle in each case of approximately 10 speech channels is provided and that the data transmission rate amounts to approximately 130 kbit/s.

3. A method according to one of claims 1 to 2, characterised in that the multi-layer modulation is a modulation similar to MSK.

4. A method according to one of claims 1 to 3, characterised in that the symbol length and/or bit duration $\tau > 10$ $\mu$s and a four-layer modulation is used.

## Revendications

1. Procédé pour la transmission numérique par radio de données et de conversations en multiplex à division du temps à bande étroite (FD/TDMA), procédé caractérisé en ce que la transmission pour réduire l'influence des effets de propagation à plusieurs voies dans n canaux, a lieu avec un taux de transmission de m Kilobit/s, de telle façon que le taux global de transmission soit r $= m . n \leq 100 ... 200$ kbit/s et que la transmission à modulation multicouche ait lieu de telle manière que la largeur de bande de la transmission se trouve en dessous de la largeur de bande de cohérence d'environ 250 kHz.

2. Procédé selon la revendication 1, caractérisé en ce qu'on prévoit une mise en faisceau de respectivement environ dix canaux de conversations et que le taux de transmission de données atteint environ 130 kbit/s.

3. Procédé selon l'une des revendications 1 et 2, caractérisé en ce que la modulation multicouche est une modulation analogue à une modulation MSK.

4. Procédé selon l'une des revendications 1 à 3, caractérisé en ce que la longueur des symboles ou la durée des bits est $\tau > 10$ $\mu$s et en ce qu'on utilise une modulation à quatre couches.

Fig. 1

Fig. 2

Fig. 3

EP 0 222 076 B1